# EUROPEAN PATENT APPLICATION

(11) **EP 0 678 685 A1**
(43) Date of publication of application: **25.10.1995**
(21) Application number: 95302481.7
(22) Date of filing: 13.04.1995
(51) Int. Cl.: F16D 41/20

(54) **Overrunning wrap spring clutch**

(30) Priority: 19.04.1994 US 229531
(71) Applicant: DANA CORPORATION, Toledo, OH 43615 (US)
(72) Inventor: Lehman, Richard J., Mt. Laurel, New Jersey 08054 (US)
(74) Representative: Cheyne, John Robert Alexander Mackenzie

(57) **Abstract**

A wrap spring clutch includes an input hub (11), an output hub (15), and a drive spring (20) for selectively connecting the input hub (11) to the output hub (15). The input and output hubs (11,15) are provided with respective co-axially aligned cylindrical outer surfaces (12,16). The drive spring (20) has a first portion (21) which is wrapped about a portion of the cylindrical outer surface (12) of the input hub (11), and a second portion (22) which is wrapped about a portion of the cylindrical outer surface (16) of the output hub (15). An intermediate portion (23) of the drive spring extends between the first and second portions (21,22) thereof and is disposed about portions of each of the respective cylindrical outer surfaces (12,16). When in the relaxed condition, this intermediate portion (23) of the drive spring defines an inner diameter which is greater than the inner diameter defined by the first and second portions (21,22) thereof. The intermediate portion (23) of the spring is thus spaced apart from the respective cylindrical outer surfaces (12,16) of the input and output hubs (11,15) when in the relaxed condition. As a result, the output hub may be rotated by a specified amount before a drag torque is exerted.

## Description

### BACKGROUND OF THE INVENTION

This invention relates in general to wrap spring clutches and in particular to an improved structure for such a wrap spring clutch having a lost motion-like unwinding capability.

Clutches are well known devices which are commonly used in machinery to selectively connect a source of rotational power to a rotatably driven mechanism. A conventional clutch includes an input shaft connected to the source of rotational power, an output shaft connected to the rotatably driven mechanism, and means for selectively connecting the input shaft to the output shaft for concurrent rotation. When the means for selectively connecting is engaged, the input shaft is connected to the output shaft so as to rotatably drive the driven mechanism. When the means for selectively connecting is disengaged, the input shaft is disconnected from the output shaft. Many different types of clutches are known in the art for accomplishing this general purpose.

One well known type of clutch is often referred to as a wrap spring clutch. A conventional wrap spring clutch includes an input hub connected to the input shaft, an output hub connected to the output shaft, and a coiled drive spring wrapped about co-axially disposed portions of the input hub and the output hub. The drive spring is provided for connecting the output hub to the input hub for concurrent rotation when the input hub is rotated in a first direction, while disconnecting the output hub from the input hub when the input hub is rotated in a second direction. To accomplish this, the ends of the drive spring are formed having inner diameters which are slightly smaller than the outer diameters of the input and output hubs upon which they are wrapped. When the input hub is rotated in a first direction, the drive spring is contracted about the input and output hubs, resulting in a tight frictional engagement therewith. As a result, the output hub is connected to the input hub so as to be rotatably driven in the first direction.

When the input hub is rotated in a second direction, however, the drive spring is expanded about the input and output hubs, resulting in only a loose frictional engagement therewith. As a result, the drive spring slips about one or both of the input and output hubs when the input hub is rotated in the second direction. Because of this loose frictional engagement, the drive spring exerts only a relatively small drag force on the output hub which tends to rotate it in the second direction with the input hub. Typically, the magnitude of the load which can be rotated in this manner in the second direction is only a small fraction of the load which can be rotated in the first direction, as described above.

In the known wrap spring clutch structure described above, the drive spring is formed having a constant inner diameter throughout its entire length. As a result, when the input hub is rotated in the second direction, the drive spring immediately exerts the relatively small drag force on the output hub which tends to rotate it therewith. This operation is acceptable for many applications. However, in some instances, it has been found to be undesirable for the output hub to immediately rotate in the second direction when the input hub is rotated in the second direction. In other words, it would be desirable to permit a limited amount of free movement, similar to a lost motion connection, to occur between the input hub and the output hub before the relatively small drag force discussed above causes the output hub to rotate in the second direction.

### SUMMARY OF THE INVENTION

This invention relates to an improved structure for a wrap spring clutch which permits a limited amount of free movement, similar to a lost motion connection, to occur between the input hub and the output hub when the output hub is rotated in the second direction. The wrap spring clutch includes an input hub, an output hub, and a drive spring for selectively connecting the input hub to the output hub. The input and output hubs are provided with respective co-axially aligned cylindrical outer surfaces. The drive spring has a first portion which is wrapped about a portion of the cylindrical outer surface of the input hub, and a second portion which is wrapped about a portion of the cylindrical outer surface of the output hub. An intermediate portion of the drive spring extends between the first and second portions thereof and is disposed about portions of each of the respective cylindrical outer surfaces. When in the relaxed condition, this intermediate portion of the drive spring defines an inner diameter which is greater than the inner diameter defined by the first and second portions thereof. The intermediate portion of the spring is thus spaced apart from the respective cylindrical outer surfaces of the input and output hubs when in the relaxed condition. As a result, the output hub may be rotated by a specified amount before a drag torque is exerted.

Various objects and advantages of this invention will become apparent to those skilled in the art from the following detailed description of the preferred embodiment, when read in light of the accompanying drawings.

### BRIEF DESCRIPTION OF THE DRAWINGS

Fig. 1 is an exploded perspective view of a wind up wrap spring clutch in accordance with this invention.

Fig. 2 is a longitudinal sectional view of the wrap spring clutch illustrated in Fig. 1.

### DETAILED DESCRIPTION OF THE PREFERRED EMBODIMENT

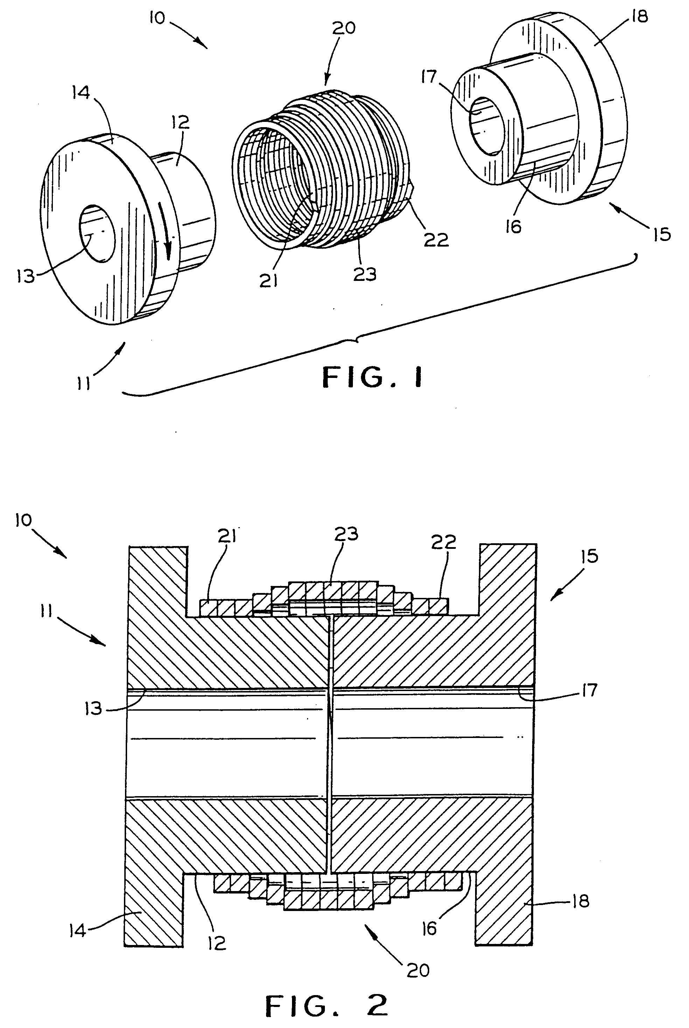

Referring now to the drawings, there is illustrated in Fig. 1 a wrap spring clutch, indicated generally at 10, in accordance with this invention. The wrap spring clutch 10 includes an input hub 11 having a cylindrical outer surface 12 formed at a first end thereof. A bore 13 is formed co-axially through the input hub 11. The input hub 11 is also formed having an enlarged annular flange 14 at a second end thereof. The input hub 11 is adapted to be connected to a source of rotational power by any conventional means, such as by a gear or pulley (not shown) connected to the flange portion 14. Alternatively, a splined or keyed input shaft (not shown) may be inserted and received within the bore 13 for cooperation with corresponding splines or keys.

The wrap spring clutch 10 also includes an output hub 15 having a cylindrical outer surface 16 formed at a first end thereof. The cylindrical outer surface 16 of the output hub 15 is co-axially aligned with and positioned adjacent to the cylindrical outer surface 12 of the input hub 11. The respective cylindrical surfaces 12 and 16 of the input and output hubs 11 and 15 are preferably formed having outer diameters which are substantially equal. A bore 17 is formed co-axially through the output hub 15. The output hub 15 is also formed having an enlarged annular flange 18 at a second end thereof. The output hub 15 is adapted to be connected to a driven load by any conventional means, such as those described above in connection with the input hub 11. Both the input hub 11 and the output hub 15 are preferably formed of a powdered metal, although any desired material may be used.

The wrap spring clutch 10 further includes a drive spring, indicated generally at 20, for selectively connecting the output hub 15 to the input hub 11 for concurrent rotation. As best shown in Fig. 2, the drive spring 20 is formed generally in the shape of a barrel, including a first end portion 21, a second end portion 22, and an intermediate portion 23 extending therebetween. The first end portion 21 is wrapped about the cylindrical outer surface 12 of the input hub 11. When in a relaxed condition, the first end portion 21 of the drive spring 20 has an inner diameter which is slightly smaller than the outer diameter of the cylindrical outer surface 12 of the input hub 11. Similarly, the second end portion 22 of the drive spring 20 is wrapped about the cylindrical outer surface 16 of the output hub 15. When in a relaxed condition, the second end portion 22 of the drive spring 20 has an inner diameter which is slightly smaller than the outer diameter of the cylindrical outer surface 16 of the output hub 15.

As mentioned above, the intermediate portion 23 of the drive spring 20 extends between the first and second end portions 21 and 22 thereof. The intermediate portion 23 of the drive spring 20 extends about portions of the cylindrical outer surfaces 12 and 16 of the input hub 11 and the output hub 15, respectively, and across the axially extending gap therebetween. When in a relaxed condition, the intermediate portion 23 of the drive spring 20 has an inner diameter which is greater than the outer diameters defined by the cylindrical outer surfaces 12 and 16. As a result, the intermediate portion 23 is spaced radially from the outer cylindrical surfaces 12 and 16 when the drive spring 20 is in the relaxed condition. The drive spring 20 is formed of a high tensile strength coiled wire.

The operation of the wrap spring clutch 10 will now be described. The input hub 11 may be rotated in either of two rotational directions. In the first rotational direction (indicated by the arrow in Fig. 1), the input hub 11 rotates in such a direction that the end portion 21 of the drive spring 20 tends to compress tightly thereabout. In the second rotational direction (opposite to that indicated by the arrow in Fig. 1), the input hub 11 rotates in such a direction that the end portion 21 of the drive spring 20 tends to expand loosely thereabout.

When the input hub 11 is rotated in the first direction, the intermediate portion 23 of the drive spring 20 begins to wrap tightly about the respective cylindrical outer surfaces 12 and 16 of the input hub 11 and the output hub 15. Once the entire length of the intermediate portion 23 of the drive spring 20 is wrapped tightly about the cylindrical portions 12 and 16, the drive spring 20 frictionally secures the output hub 15 to the input hub 11 for concurrent rotation in the first direction. As a result, the output hub 15 is driven to rotate in the first direction with the input hub 11.

When the input hub 11 is subsequently rotated in the second direction, the intermediate portion 23 of the drive spring initially begins to unwrap from about the respective cylindrical outer surfaces 12 and 16 of the input hub 11 and the output hub 15. As this unwrapping occurs, the intermediate portion 23 of the drive spring 20 is returned to its relaxed condition illustrated in Fig. 2. Throughout this unwrapping process, the input hub rotates in the second direction, but the output hub 15 remains stationary. It can be seen, therefore, that the unwrapping of the intermediate portion 23 of the drive spring 20 prevents the rotation of the input hub 11 from causing corresponding rotation of the output hub 15. This results in a lost motion-like connection between the output hub 15 and the input hub 11.

When the intermediate portion 23 of the drive spring 20 is returned to its relaxed condition illustrated in Fig. 2, further rotation of the input hub 11 in the second direction will tend to cause rotation of the output hub 15 in the second direction. This is because the end portions 21 and 22 of the drive spring remain in loose frictional engagement with the respective cylindrical outer surfaces 12 and 16 of the input hub 11 and the output hub 16. As a result, the drive spring 20 slips about one or both of the input and output hubs 11 and 15 when the input hub 11 is rotated in the second direction. Because of this loose frictional engagement, the drive spring 20 exerts only a relatively small drag force on the output hub 15 which tends to rotate it in the second direction with the input hub 11.

In accordance with the provisions of the patent statutes, the principle and mode of operation of this invention have been explained and illustrated in its preferred embodiment. However, it must be understood that this invention may be practiced otherwise than as specifically explained and illustrated without departing from its spirit or scope.

## Claims

1. A wrap spring clutch comprising:
an input hub having an outer surface defining an input hub outer dimension;
an output hub having an outer surface defining an output hub outer dimension; and
a drive spring having a first end portion disposed about said input hub outer surface, a second end portion disposed about said output hub outer surface, and an intermediate portion extending between said first and second end portions, said first and second end portions defining respective inner dimensions which are smaller than said input hub and output hub outer dimensions when said drive spring is in a relaxed condition, said intermediate portion defining an inner dimension which is larger than said input hub and output hub outer dimensions when said drive spring is in a relaxed condition.

2. A wrap spring clutch as defined in claim 1, wherein at least a portion of said intermediate portion of said drive spring is spaced apart from at least one of said outer surfaces when said drive spring is in a relaxed condition.

3. A wrap spring clutch as defined in claim 1, wherein said outer surface of said input hub and said outer surface of said output hub are co-axially aligned.

4. A wrap spring clutch as defined in claim 1, wherein said outer surfaces of said input and output hubs are formed from powdered metal.

5. A wrap spring clutch as defined in claim 1, wherein said drive spring is formed of a coiled wire.

6. A wrap spring clutch as defined in claim 1, wherein said input hub has a cylindrical outer surface defining an input hub outer diameter.

7. A wrap spring clutch as defined in claim 6, wherein said output hub has a cylindrical outer surface defining an output hub outer diameter.

8. A wrap spring clutch as defined in claim 7, wherein said drive spring has a first cylindrical end portion disposed about said input hub outer surface, a second cylindrical end portion disposed about said output hub outer surface, and a generally barrel-shaped intermediate portion extending between said first and second cylindrical end portions, said first and second end cylindrical portions defining respective inner diameters which are smaller than said input hub and output hub outer diameters when said drive spring is in a relaxed condition, said intermediate portion defining an inner diameter which is larger than said input hub and output hub outer diameters when said drive spring is in a relaxed condition.

9. A wrap spring clutch as defined in claim 8, wherein at least a portion of said intermediate portion of said drive spring is spaced apart from at least one of said outer surfaces when said drive spring is in a relaxed condition.

10. A wrap spring clutch as defined in claim 8, wherein said outer surface of said input hub and said outer surface of said output hub are co-axially aligned.
